# EUROPEAN PATENT APPLICATION

(11) **EP 4 335 576 A1**
(43) Date of publication of application: **13.03.2024**
(21) Application number: 23195680.6
(22) Date of filing: 06.09.2023
(51) Int. Cl.: B23B 27/10, B23B 31/02, B23Q 11/10

(54) **SPRAY NOZZLE FOR LUBRICANT AND COOLANT FLUID**

(30) Priority: 06.09.2022 US 202263404044 P; 05.09.2023 US 202318460808
(71) Applicant: Schaublin SA, 2800 Delémont (CH)
(72) Inventor: MOTSCHI, René, Oberbuchsiten (CH)
(74) Representative: Bjerkén Hynell KB

(57) **Abstract**

A spray nozzle assembly for a machining apparatus includes an outer ring extending from a first axial inlet end to a first axial outlet end. The outer ring contains a flow distribution section that extends inwardly from the ends of the first axial inlet towards the first axial outlet and terminating therebetween. The outer ring includes a diffuser section extending inwardly from the first axial outlet end towards and ends at the flow distribution section. The outer ring has a first interior area defined by a first interior surface which contains a diffuser surface aligned with the diffuser section and multiple flow passages formed within and aligned with the flow distribution section and overlaps into the diffuser surface, and at least one guide surface and an abutment surface; and an inner member extending into the first interior area.

## Description

### BACKGROUND

### 1. Field of the Disclosure

The present disclosure relates generally to a spray nozzle assembly for a machining apparatus and in particular to a spray nozzle configured to discharge a tubular jet of fluid in a conical or cylindrical shape.

### 2. Description of Related Art

Machining apparatuses include milling machines and lathes which are configured to rotate a tool or work piece and high speeds to cut various materials such as metals. The high speeds create friction between the tool and workpiece and tend to cause the tool and workpiece to heat up and wear. To reduce wear and control temperature, some prior art machining apparatuses employed tools that have twisted bores extending therethrough for conveying a fluid (e.g., a coolant or lubricant) through the tool and at the interface between the tool and the workpiece.

However, the formation of the twisted bores is a complex and costly process. Some prior art machining apparatuses employed external fluid jets that conveyed the fluid from an external source and sprayed the fluid on the tool and workpiece from an area external to the tool, workpiece and machining apparatus. However, use of such externally based fluid conveying systems are inefficient because the fluid splashes away from the tool due to the rotation and the external fluid jets can only focus on a small area of the tool. For broader coverage of the tool with the fluid, multiple external fluid jets need to be employed.

Thus, there is a need for an improved system and apparatus for applying a fluid to a tool or workpiece of a machining apparatus that overcomes the foregoing problems.

### SUMMARY

According to aspects illustrated herein, there is provided a spray nozzle assembly for a machining apparatus. The assembly includes an outer ring extending from a first axial inlet end to a first axial outlet end, the outer ring contains a flow distribution section extending inwardly from the first axial inlet end towards the first axial outlet end and terminating therebetween. The outer ring has a diffuser section extending inwardly from the first axial outlet end towards and terminates at the flow distribution section. The outer ring also contains a first interior area defined by a first interior surface which includes a diffuser surface substantially aligned with the diffuser section and has a multiple flow passages formed within itself and is substantially aligned with the flow distribution section and overlaps into the diffuser surface, and at least one guide surface and an abutment surface; and an inner member extending into the first interior area.

In some embodiments either alone or together with any one or more of the aforementioned and/or after-mentioned embodiments, the inner member of the assembly includes a cutting tool.

In some embodiments either alone or together with any one or more of the aforementioned and/or after-mentioned embodiments, the cutting tool has a tool exterior surface and a circumferential flow area which is defined between the tool exterior surface and the diffuser surface and is in fluid communication with the various flow passages.

In some embodiments either alone or together with any one or more of the aforementioned and/or after-mentioned embodiments, an inner member includes an inner ring extending from a second axial inlet end and a second axial outlet end and the inner ring has an outer surface; a circumferential flow area is defined between the outer surface and the diffuser surface and is in fluid communication with the multiple flow passages.

In some embodiments either alone or together with any one or more of the aforementioned and/or after-mentioned embodiments, at least one of the flow passages has a substantially cylindrical shape and terminates at a partially closed end.

In some embodiments either alone or together with any one or more of the aforementioned and/or after-mentioned embodiments, at least one of the various flow passages is skewed relative to a longitudinal axis of the outer ring.

In some embodiments either alone or together with any one or more of the aforementioned and/or after-mentioned embodiments, the diffuser surface is substantially cylindrical.

In some embodiments either alone or together with any one or more of the aforementioned and/or after-mentioned embodiments, diffuser surface is conical and radially converging towards the first outlet end.

In some embodiments either alone or together with any one or more of the aforementioned and/or after-mentioned embodiments, outer ring has an outer-ring exterior surface extending between the first axial inlet end and the first axial outlet end, the outer-ring exterior surface includes a sealing surface tapered radially outward from the first axial inlet end and terminating at an apex located between the first axial inlet end and the first axial outlet end, the sealing surface being configured to engage a seal and axially retain the spray nozzle assembly in a spindle nut, clamping nut or collet clamping nut.

In some embodiments either alone or together with any one or more of the aforementioned and/or after-mentioned embodiments, the outer-ring exterior surface comprises a glide surface tapered radially inward from the apex, the glide surface being configured to facilitate inserting the spray nozzle assembly into a first bore of a spindle nut.

In some embodiments either alone or together with any one or more of the aforementioned and/or after-mentioned embodiments, the outer-ring exterior surface includes a shoulder axially facing the first outlet end and extending radially inward from the glide surface and terminating at a cylindrical section of the outer surface, the shoulder being configured to reach a limit stop of the spindle nut to axially retain the spray nozzle assembly in the spindle nut.

In some embodiments either alone or together with any one or more of the aforementioned and/or after-mentioned embodiments, the cylindrical section is configured to engage a second bore of the spindle nut.

In some embodiments either alone or together with any one or more of the aforementioned and/or after-mentioned embodiments, the outer surface of the inner ring includes a support surface extending axially inward from the second axial inlet end toward the second axial outlet end and terminates between an inner-ring abutment surface and has a second support surface extending axially from the inner-ring abutment surface and terminates at a ledge.

In some embodiments either alone or together with any one or more of the aforementioned and/or after-mentioned embodiments, the outer surface of the inner ring includes a flow guiding surface extending from the ledge and ending at the second axial outlet end of the inner ring.

In some embodiments either alone or together with any one or more of the aforementioned and/or after-mentioned embodiments, a portion of at least one guide surface of the outer ring is engaged with the support surface of the inner ring; the abutment surface of the outer ring abuts the inner-ring abutment surface and; another portion of the at least one guide surface of the outer ring engages the second support surface of the inner ring.

There is disclosed herein a spindle nut assembly. The assembly includes a spindle-nut body extending from a first spindle-nut axial end to a second spindle-nut axial end. The spindle-nut body includes a first spindle-nut inner surface and a second spindle-nut inner surface with a limit stop extending therebetween, the limit stop axially facing the a first spindle-nut axial end, and a radially inward opening circumferential groove formed in an interior area of the spindle-nut body; the outer ring is disposed in the interior area of the spindle-nut body such that the shoulder reaches the limit stop and the cylindrical section engages the second bore of the spindle nut.

In some embodiments either alone or together with any one or more of the aforementioned and/or after-mentioned embodiments, a seal is disposed in the circumferential groove, the seal engaging the sealing surface, the seal urging the spray nozzle assembly into the limit stop.

There is disclosed herein a spindle assembly for a turning machine, on a milling machine or on a drilling machine. The spindle assembly for a turning machine includes a spindle; a collet chuck assembly rotatably mounted to the spindle; the cutting tool mounted in the collet chuck assembly and extending through the nozzle assembly; a supply of fluid in fluid communication with the collet chuck assembly; a spindle nut assembly mounted on the collet chuck assembly; the fluid flowing through the flow passages and the flow area and a tubular stream of the fluid being discharged from the spray nozzle assembly around the cutting tool.

In some embodiments either alone or together with any one or more of the aforementioned and/or after-mentioned embodiments, the tubular fluid stream is cylindrical.

In some embodiments either alone or together with any one or more of the aforementioned and/or after-mentioned embodiments, the tubular fluid stream is tapered.

In some embodiments either alone or together with any one or more of the aforementioned and/or after-mentioned embodiments, the tubular fluid stream rotates transverse to the flow of the tubular stream and in a direction opposite the direction of rotation of the spindle to prevent the tubular stream from being dispersed away from the cutting tool.

In some embodiments either alone or together with any one or more of the aforementioned and/or after-mentioned embodiments, the tubular fluid stream is focused on and meets at a cutting edge of the cutting tool.

A spindle assembly is provided that has an outer ring and an inner member. The outer ring has a plurality of flow passages and a diffuser section. The flow passages are defined as open recesses in an inner surface of the outer ring. The flow passages each have an axial inlet and are each in fluid communication with the diffuser section. The inner member has an exterior surface and is in the outer ring with the exterior surface in contact with the inner surface so that fluid flowing from the axial inlet and through the plurality of flow passages discharges as a tubular stream from a circumferential flow area between the exterior surface and the diffuser section.

In some embodiments either alone or together with any one or more of the aforementioned and/or after-mentioned embodiments, the inner member is an inner ring.

In some embodiments either alone or together with any one or more of the aforementioned and/or after-mentioned embodiments, the inner ring removably secures a cutting tool therein.

In some embodiments either alone or together with any one or more of the aforementioned and/or after-mentioned embodiments, the inner ring has a flow guiding surface on the exterior surface.

In some embodiments either alone or together with any one or more of the aforementioned and/or after-mentioned embodiments, the inner member is a cutting tool.

In some embodiments either alone or together with any one or more of the aforementioned and/or after-mentioned embodiments, at least one of the flow passages has a cylindrical shape that terminates at a partially closed end.

In some embodiments either alone or together with any one or more of the aforementioned and/or after-mentioned embodiments, at least one of the flow passages has a conical shape that terminates at a partially closed end.

In some embodiments either alone or together with any one or more of the aforementioned and/or after-mentioned embodiments, at least one of the flow passages is tilted relative to a longitudinal axis of the outer ring.

In some embodiments either alone or together with any one or more of the aforementioned and/or after-mentioned embodiments, the diffuser section is a cylindrical surface.

In some embodiments either alone or together with any one or more of the aforementioned and/or after-mentioned embodiments, the diffuser section is a conical surface that radially converges towards the inner member.

In some embodiments either alone or together with any one or more of the aforementioned and/or after-mentioned embodiments, the spindle assembly further includes a spindle-nut body having an interior area with a limit stop. The inner member and the outer ring are disposed in the interior area of the spindle-nut body with the outer ring abutting the limit stop.

In some embodiments either alone or together with any one or more of the aforementioned and/or after-mentioned embodiments, the spindle-nut body has a radially inward opening circumferential groove formed in the interior area where a seal is in the circumferential groove urging the outer ring into the limit stop.

In some embodiments either alone or together with any one or more of the aforementioned and/or after-mentioned embodiments, the outer ring has an outer-ring exterior surface with a sealing surface tapered radially outward from the axial inlet and terminating at an apex located between the axial inlet and an outlet end of the outer ring. The sealing surface engages a seal and axially retains the outer ring in the spindle-nut body.

In some embodiments either alone or together with any one or more of the aforementioned and/or after-mentioned embodiments, the outer-ring exterior surface has a glide surface tapered radially inward from the apex. The glide surface facilitates inserting the outer ring into the interior area of the spindle-nut body.

In some embodiments either alone or together with any one or more of the aforementioned and/or after-mentioned embodiments, the outer-ring exterior surface has a shoulder extending radially inward from the glide surface. The shoulder abuts the limit stop to axially retain the outer ring in the spindle-nut body.

In some embodiments either alone or together with any one or more of the aforementioned and/or after-mentioned embodiments, wherein the tubular fluid stream is cylindrical.

In some embodiments either alone or together with any one or more of the aforementioned and/or after-mentioned embodiments, the tubular fluid stream is conical.

In some embodiments either alone or together with any one or more of the aforementioned and/or after-mentioned embodiments, the tubular fluid stream is directed in a direction opposite a direction of rotation of the inner member.

In some embodiments either alone or together with any one or more of the aforementioned and/or after-mentioned embodiments, the inner member is a cutting tool and the tubular fluid stream is focused on and converges at a cutting edge of the cutting tool.

Any of the foregoing embodiments may be combined.

### BRIEF DESCRIPTION OF THE DRAWINGS

Referring now to the Figures, which are exemplary embodiments, and wherein the like elements are numbered alike:
FIG. 1 is a perspective cross sectional view of a collet chuck assembly with a spray nozzle assembly of the present disclosure secured there to by a spindle nut;
FIG. 2 is an enlarged perspective cross sectional view of the spindle nut with the spray nozzle assembly of the present disclosure secured therein;
FIG. 3 is a perspective cross sectional view of the spray nozzle assembly of the present disclosure;
FIG. 4 is a perspective cross sectional view of an inner member of the spray nozzle assembly of the present disclosure;
FIG. 5 is a perspective cross sectional view of an outer ring of the spray nozzle assembly of the present disclosure with a conical diffuser surface;
FIG. 6A, is a perspective cross sectional view of an embodiment of the outer ring of FIG. 5 having skewed flow passages;
FIG. 6B is a cross sectional view of the outer ring of FIG. 6A;
FIG. 6C is a cross sectional view of the spray nozzle assembly with an outer ring having a conical diffuser surface and shown with a cutting tool therein and a conical fluid jet being discharged therefrom;
FIG. 7A is a perspective view of an embodiment of the outer ring of the present disclosure having a cylindrical diffuser surface;
FIG. 7B is a back end view of the outer ring of FIG. 7B;
FIG. 7C is a cross sectional view of the outer ring taken across section A-A of FIG. 7B;
FIG. 7D is a cross sectional view of the outer ring of FIG. 7A shown installed in a spindle nut and having a cylindrical tubular jet of fluid being discharged therefrom and around a cutting tool;
FIG. 7E is a cross sectional view of the outer ring of FIGS. 5 and 6A shown installed in a spindle nut and having a cylindrical tubular jet of fluid being discharged therefrom and around a cutting tool;
FIG. 7F is a cross sectional view of the outer ring of FIG. 7A shown installed in a spindle nut and having a sealed disc therein;
FIGS. 8A-8G are various views of an exemplary embodiment of an outer ring according to the present disclosure having cylindrical flow passages;
FIGS. 9A-9G are various views of an exemplary embodiment of an outer ring according to the present disclosure having conical flow passages;
FIGS. 10A-10G are various views of an exemplary embodiment of an outer ring according to the present disclosure having tilted conical flow passages;
FIGS. 11A-11G are various views of an exemplary embodiment of an inner ring according to the present disclosure;
FIGS. 12A-12G are views of an embodiment of a spray nozzle assembly of the present disclosure;
FIG. 13 is a cross sectional view of the spray nozzle assembly of taken across section A-A of FIG. 12D;
FIG. 14 is a cross sectional view of the spray nozzle assembly of taken across section B-B of FIG. 12D;
FIG. 15 shows the collet chuck assembly with the spray nozzle assembly of the present disclosure installed therein and cylindrical tubular jet of fluid being discharged therefrom and around a cutting tool; and
FIG. 16 shows the collet chuck assembly with the spray nozzle assembly of the present disclosure installed therein and conical tubular jet of fluid being discharged therefrom and around a cutting tool.

### DETAILED DESCRIPTION

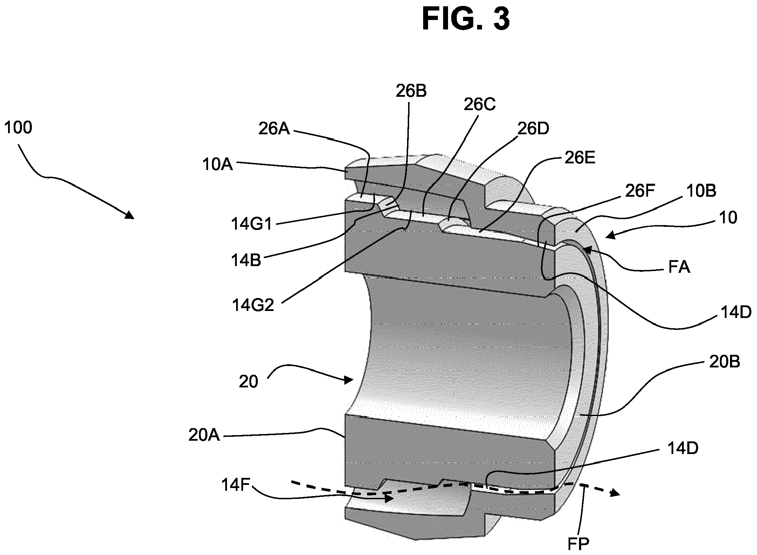

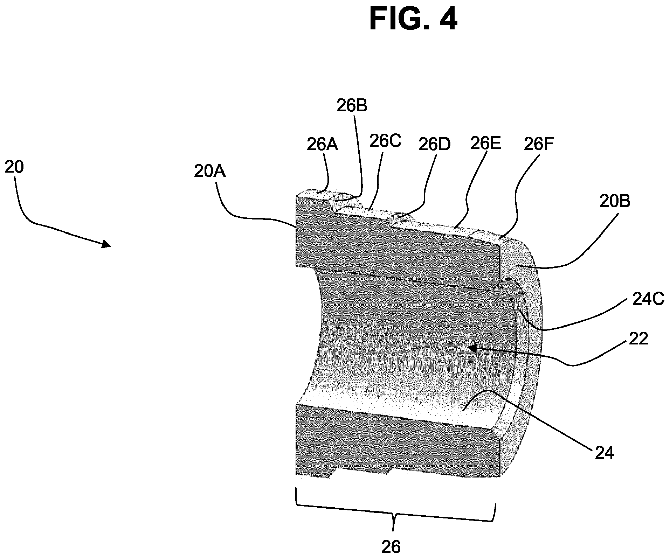

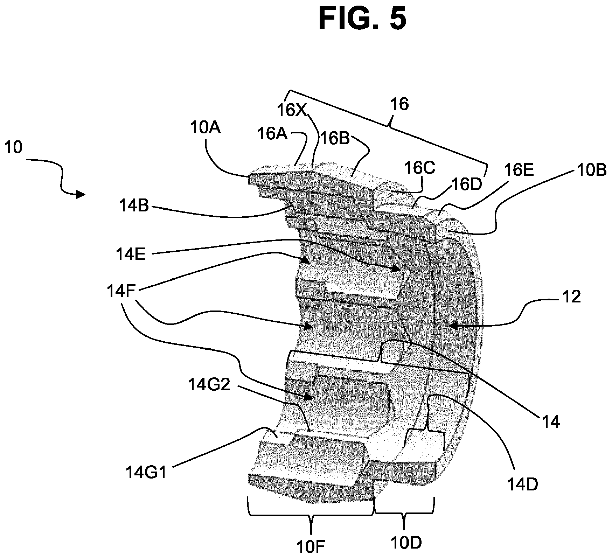

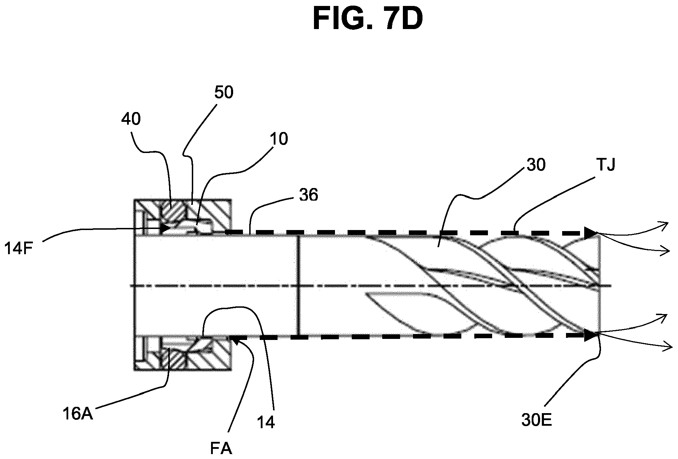

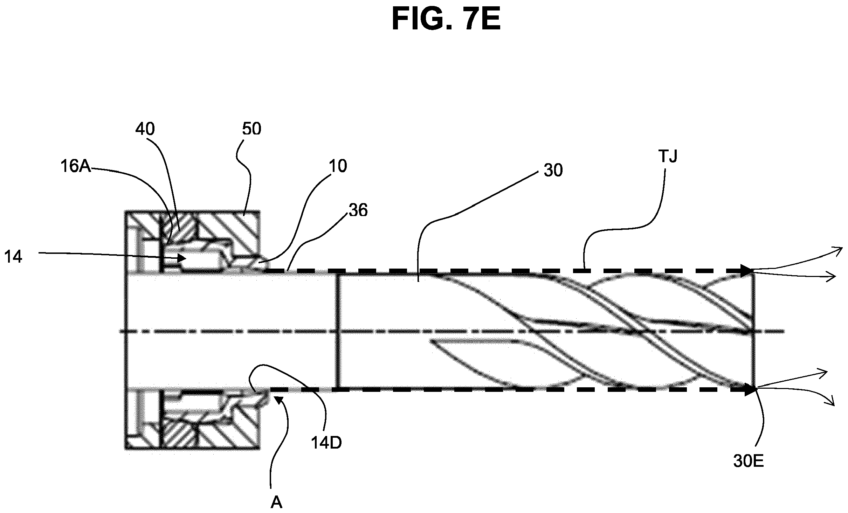

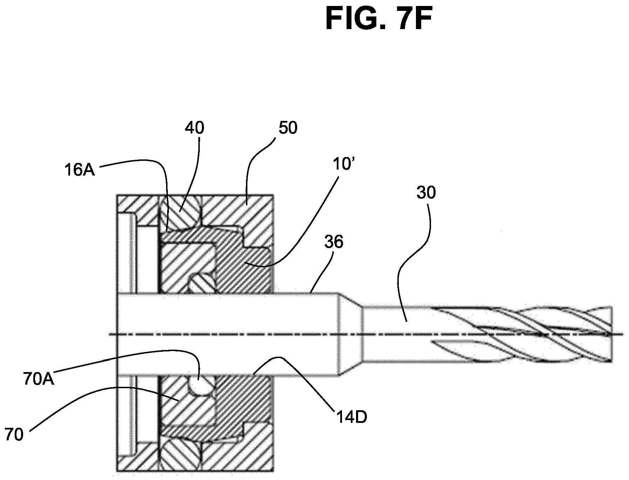

As shown in FIG. 3, a spray nozzle assembly for a machining apparatus is generally designated by the numeral 100. The spray nozzle assembly 100 includes an outer ring 10 that extends from a first axial inlet end 10A to a first axial outlet end 10B thereof. As shown in FIG. 5, the outer ring 10 has a flow distribution section 10F that extends inwardly from the first axial inlet end 10A towards the first axial outlet end 10B and terminates therebetween. The outer ring 10 has a diffuser section 10D that extends inwardly from the first axial outlet end 10B towards and terminating at the flow distribution section 10F. The outer ring 10 has a first interior area 12 that is defined by a first interior surface 14 which has a diffuser surface 14D substantially aligned with the diffuser section 10D and has a plurality of flow passages 14F formed therein and substantially aligned with the flow distribution section 10F and overlapping into the diffuser surface 14D. The first interior surface 14 of the outer ring 10 has a first guide surface 14G1 and a second guide surface 14G2 and an abutment surface 14B. In some embodiments, the spray nozzle assembly 100 includes an inner member (e.g., an inner ring 20 as shown in FIG. 4 or a cutting tool 30 as shown in FIGS. 7D and 7E) that extends into the first interior area 12. The cutting tool 30 has a tool exterior surface 36. A circumferential flow area FA is defined between the tool exterior surface 36 and the diffuser surface 14D and is in fluid communication with the plurality of flow passages 14F, as shown in FIGS. 7D and 7E. In some embodiments, the outer member 10' has a sealed disc 70 disposed therein and having a seal 70A compressed between the sealed disc 70 and the outer member 10', as shown in FIG. 7F. In the embodiment shown in FIG. 7F, the fluid (e.g., coolant or lubricant) travels through twisted bores formed inside the cutting tool 30.

As shown in FIG. 3, the inner member is in the form of an inner ring 20 which extends from a second axial inlet end 20A to a second axial outlet end 20B. The inner ring 20 has an outer surface 26 (see FIG. 4). A circumferential flow area FA is defined between tapered portion of the flow guiding surface 26F and the diffuser surface 14D and is in fluid communication with the plurality of flow passages 14F. The circumferential flow area FA is a conical annular channel.

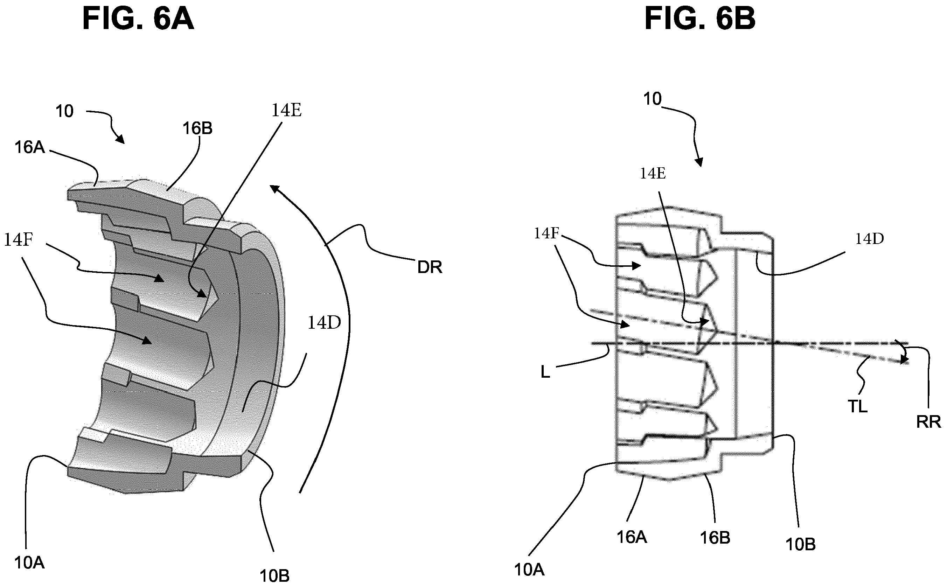

As shown in FIGS. 5, 6A and 6B, the plurality of flow passages 14F each have a substantially cylindrical shape and terminate at a partially closed end 14E. In some embodiments, each of the plurality of flow passages 14F is skewed in a tilt direction depicted by the arrow RR relative to a longitudinal axis L of the outer ring 10 along a tilt axis TL, as shown in FIG. 6B. The tilt direction RR is opposite to the direction of rotation DR of the outer ring 10 (see FIG. 6A) which rotates in the same direction as the spindle. Of course, it is contemplated by the present disclosure for the tilt direction to be in any desired direction such as, but not limited to, in the same direction as the rotation of the spindle, opposite the direction of rotation of the spindle, and combinations thereof.

It should be recognized that flow passages 14F are shown as linear passages along a linear tilt direction for ease of discussion. Of course, it is contemplated by the present disclosure for flow passages 14F to be curved or twisted along a tilt direction that is in the same direction as the rotation of the spindle, opposite the direction of rotation of the spindle, and combinations thereof.

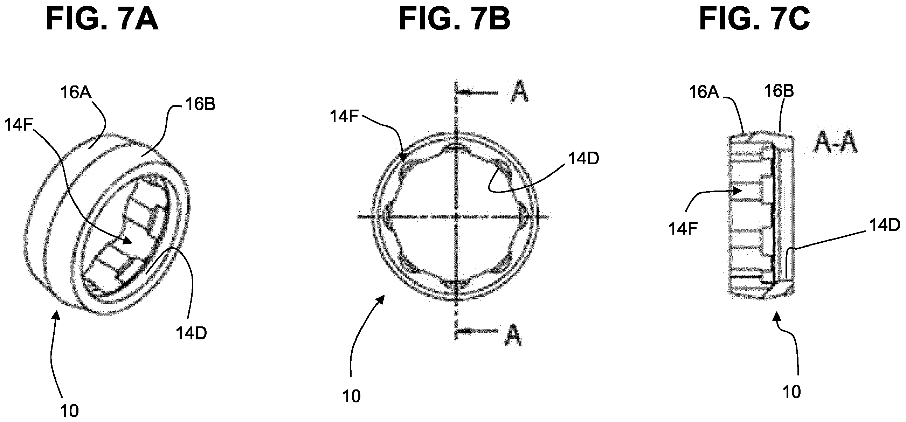

As shown in FIGS. 7A, 7B and 7C, the diffuser surface 14D is substantially cylindrical.

As shown in FIGS. 6A and 6B, the diffuser surface 14D is conical and radially converging towards the first outlet end 10B.

While the outer ring 10 is shown and described as having the flow passages 14F therein, the present disclosure is not limited in this regard as other embodiments are included in the present disclosure including the inner member 20 having flow passages therein instead if or in addition to the outer ring 10 having the flow passages 14F therein.

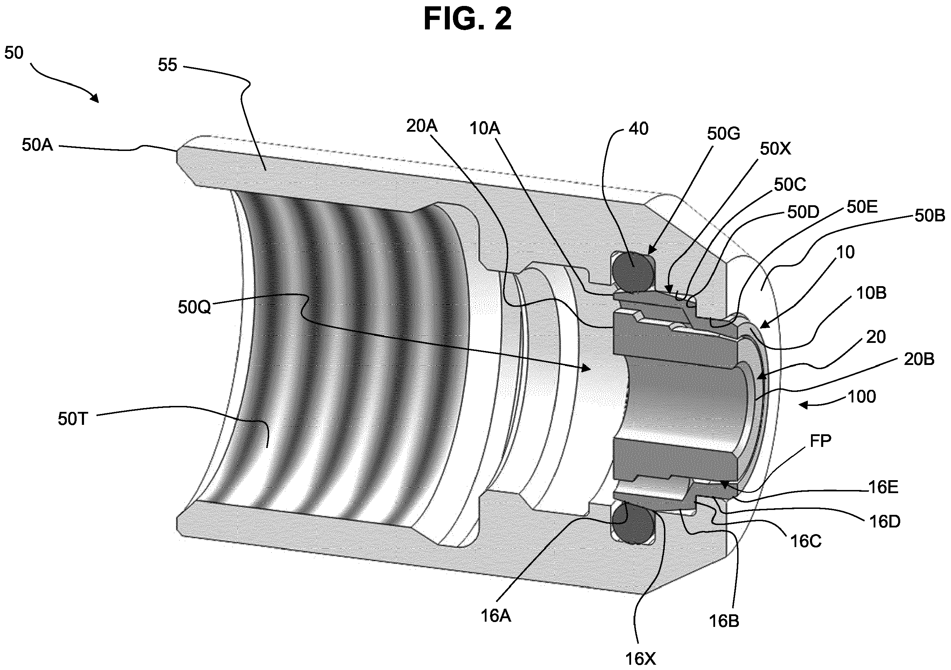

As shown in FIG. 5, the outer ring 10 has an outer-ring exterior surface 16 that extends between the first axial inlet end 10A and the first axial outlet end 10B. The outer-ring exterior surface 16 includes a sealing surface 16A that is tapered radially outward from the first axial inlet end 10A and terminates at an apex 16X located between the first axial inlet end 10A and the first axial outlet end 10B. The sealing surface 16A is configured to engage a seal 40 (see FIG. 2) and axially retains the spray nozzle assembly 100 in a spindle nut assembly 50, with the assistance of fluid pressure in the interior area of the collet chuck assembly 60. The outer ring exterior surface 16 includes a glide surface 16B that is tapered radially inward from the apex 16X. The glide surface 16B is configured to facilitate inserting the spray nozzle assembly 100 into a first bore 50B (see FIG. 2) of a spindle nut assembly 50.

As shown in FIG. 5. the outer-ring exterior surface 16 includes a shoulder 16C that axially faces the first outlet end 10B and extends radially inward from the glide surface 16B and terminates at a cylindrical section 16D of the outer surface 16. The shoulder 16C is configured to abut a limit stop 50D (see FIG. 2) of the spindle nut assembly 50 to axially retain the spray nozzle assembly 100 in the spindle nut assembly 50. The cylindrical section 16D is configured to engage a second bore 50E (see FIG. 2) of the spindle nut assembly 50.

As shown in FIG. 4, the outer surface 26 of the inner ring 20 has a support surface 26A that extends axially inward from the second axial inlet end 20A toward the second axial outlet end 20B and terminates therebetween at an inner-ring abutment surface 26B. The outer surface 26 has a second support surface 26C that extends axially from the inner-ring abutment surface 26B and terminates at a ledge 26D. The outer surface 26 of the inner ring 20 has a flow guiding surface 26E, 26F that extends from the ledge 26D and terminates at the second axial outlet end 20B of the inner ring 20. The guiding surface 26F is tapered radially inward toward the second axial outlet end 20B thereby forming a conical surface. As shown in FIG. 3, a portion of the guide surface 14G1 of the outer ring 10 is engaged with the support surface 26A of the inner ring 20; and the abutment surface 14B of the outer ring 10 abuts the inner-ring abutment surface 26B. Another portion of the guide surface 14G2 of the outer ring 10 engages the second support surface 26C of the inner ring 20.

As shown in FIG. 2, a spindle nut assembly 50 is generally designated by the numeral 50. The spindle nut assembly 50 has a spindle-nut body 55 that extends from a first spindle-nut axial end 50A to a second spindle-nut axial end 50X. The spindle-nut body 55 has a first spindle-nut inner surface 50C and a second spindle-nut inner surface 50E with a limit stop 50D extending therebetween. The limit stop 50D axially faces the first spindle-nut axial end 50A. A radially inward opening circumferential groove 50G is formed in an interior area 50Q of the spindle-nut body 55. The spindle nut assembly 50 includes the spray nozzle assembly 100 of with the outer ring 10 disposed in the interior area 50Q of the spindle-nut body 55 such that the shoulder 16C abuts the limit stop 50D and the cylindrical section 16D engages the second bore 50E of the spindle nut 50. The spindle nut assembly 50 includes a seal 40 disposed in the circumferential groove 50G. The seal 40 engages the sealing surface 16A, the seal 40 urges the spray nozzle assembly 100 into the limit stop 50D.

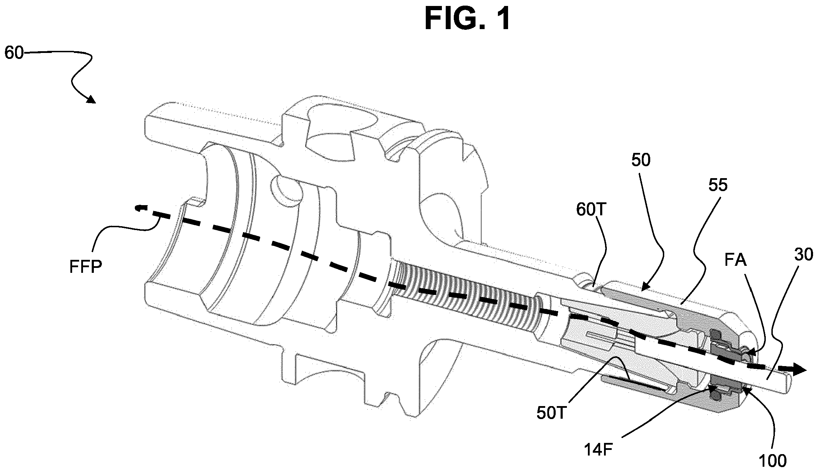

As shown in FIG. 1, a collet chuck assembly 60 is rotatably mounted to the spindle of a turning machine (not shown). The spindle assembly includes the spindle and a cutting tool 30 mounted in the collet chuck assembly 60 via a collet. The cutting tool 30 extends through the nozzle assembly 100. A supply of fluid (e.g., a coolant or lubricant) is in fluid communication with the collet chuck assembly 60. The spindle-nut body 55 has a threaded area 50T that engages a complementary threaded area 60T of collet chuck assembly 60. The spindle nut assembly 50 is removably mounted on the collet chuck assembly 60. The fluid follows the flow path designated by the dashed arrow FFP and flows through the center of the spindle and collet chuck assembly 60, through slots in the collet and the flow passages 14F and the flow area FA. A tubular stream of the fluid is discharged from the spray nozzle assembly 100 around the cutting tool 30.

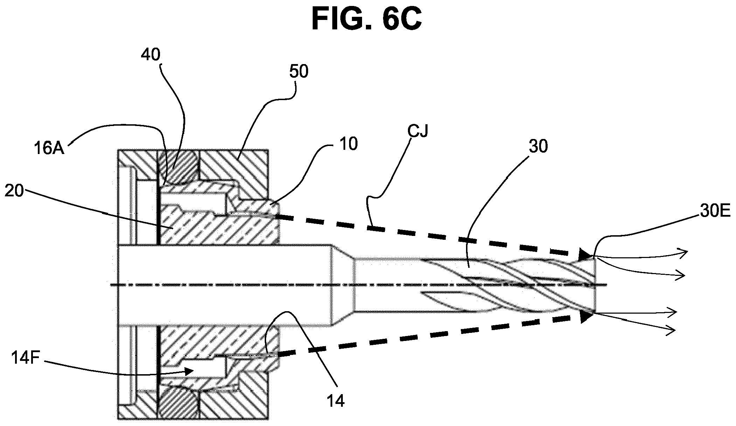

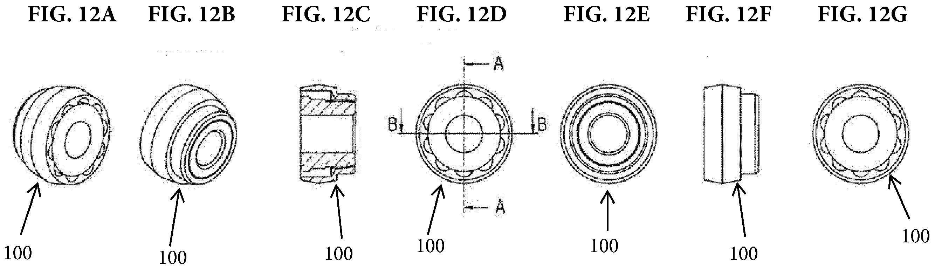

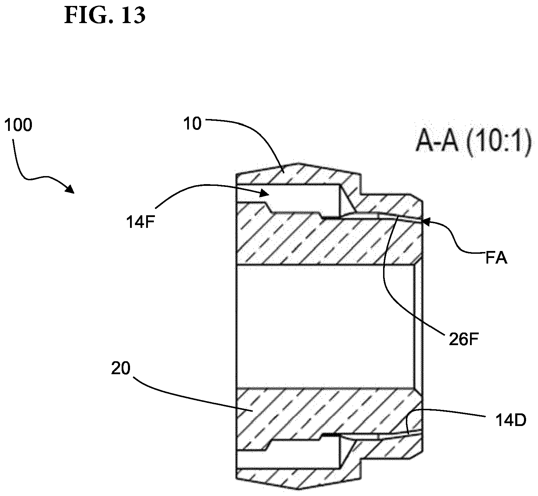

As shown in FIGS. 7D, 7E and 12 the tubular fluid stream is cylindrical TJ. As shown in FIGS. 6C and 13 the tubular fluid stream is tapered CJ (e.g., conical). As shown in FIGS. 6A and 6B, the tubular fluid stream CJ (see FIG. 6C) is rotating in a direction RR opposite to a direction DR of rotation of the spindle to prevent the tubular stream from being dispersed away from the cutting tool 30. As shown in FIGS. 6C and 13, the tubular fluid stream CJ is focused on and converges at a cutting edge 30E of the cutting tool 30.

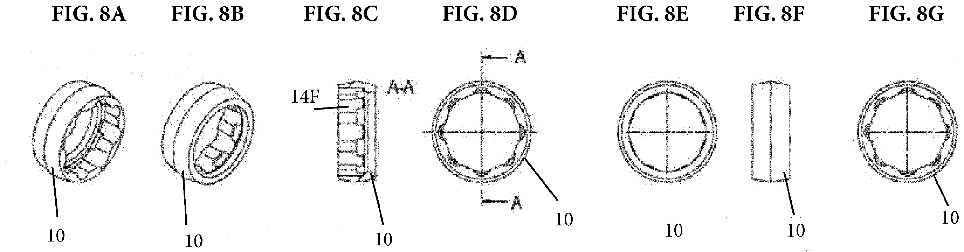

Referring now to FIGS. 8A-8G, various views of an embodiment of outer ring 10 according to the present disclosure are shown having cylindrical flow passages 14F that terminate at partially closed end 14E.

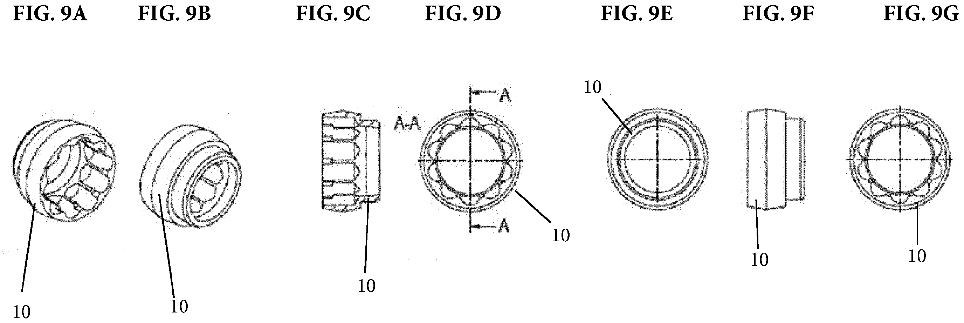

Referring now to FIGS. 9A-9G, various views of an embodiment outer ring 10 according to the present disclosure are shown having conical flow passages 14F that terminate at partially closed end 14E.

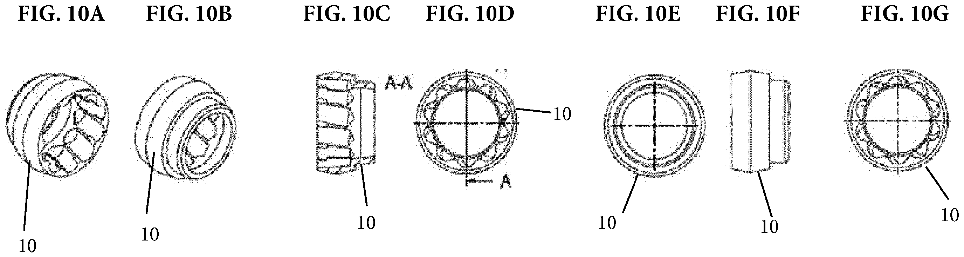

Referring now to FIGS. 10A-10G, various views of an embodiment outer ring 10 according to the present disclosure are shown having conical flow passages 14F that terminate at partially closed end 14E and are skewed in a tilt direction relative to the longitudinal axis of the outer ring.

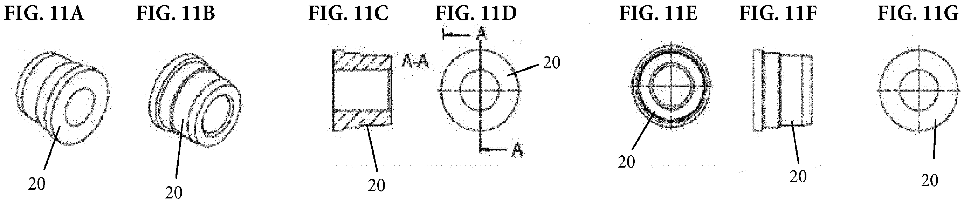

Referring now to FIGS. 11A-11G, various views of an embodiment of inner ring 20 according to the present disclosure are shown.

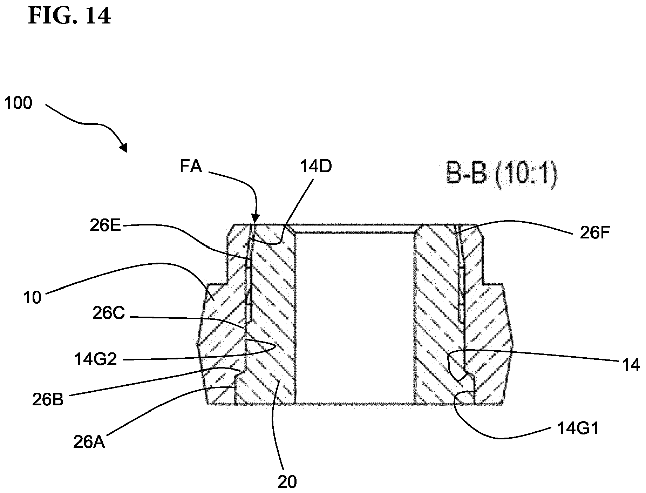

Referring now to FIGS. 12A-12G, various views of an embodiment of spray nozzle assembly 100 according to the present disclosure are shown. FIG. 13 is a cross sectional view of spray nozzle assembly 100 of taken across section A-A of FIG. 12D. FIG. 14 is a cross sectional view of spray nozzle assembly 100 of taken across section B-B of FIG. 12D.

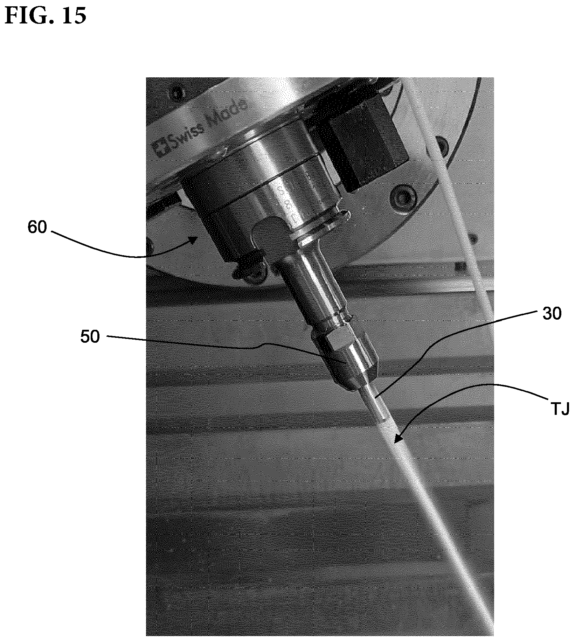

FIG. 15 shows the collet chuck assembly 60 with the spray nozzle assembly 100 of the present disclosure installed therein. Here, spray nozzle assembly 100 has fluid passages that are cylindrical such that the spray nozzle assembly is configured to discharge cylindrical tubular jet of fluid therefrom and around cutting tool 30.

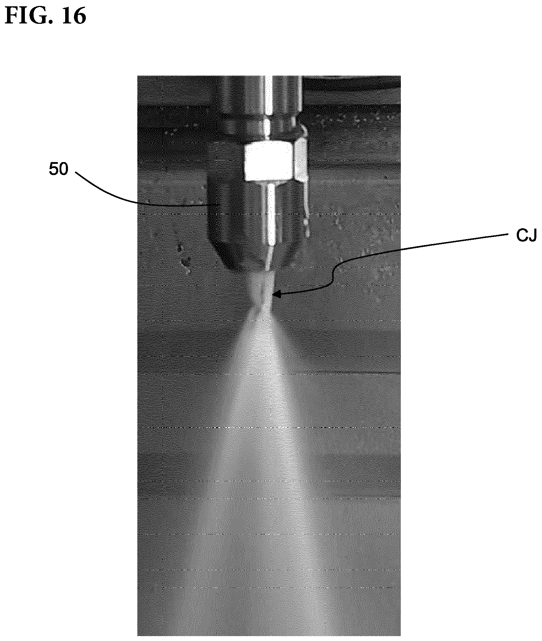

FIG. 16 shows the collet chuck assembly 60 with the spray nozzle assembly 100 of the present disclosure installed therein. Here, spray nozzle assembly 100 is configured to discharge a conical tubular jet of fluid therefrom and around cutting tool 30.

It should also be noted that the terms "first", "second", "third", "upper", "lower", and the like may be used herein to modify various elements. These modifiers do not imply a spatial, sequential, or hierarchical order to the modified elements unless specifically stated.

While the present disclosure has been described with reference to various exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A spindle assembly comprising:
an outer ring having a plurality of flow passages and a diffuser section, the plurality of flow passages being defined as open recesses in an inner surface of the outer ring, the plurality of flow passages each having an axial inlet and each being in fluid communication with the diffuser section; and
an inner member having an exterior surface, the inner member being in the outer ring with the exterior surface in contact with the inner surface of the outer ring so that fluid flowing from the axial inlet and through the plurality of flow passages discharges as a tubular stream from a circumferential flow area between the exterior surface and the diffuser section.

2. The spindle assembly of claim 1, wherein the inner member comprises an inner ring.

3. The spindle assembly of claim 2, wherein the inner ring is configured to removably secure a cutting tool therein.

4. The spindle assembly of claim 2 or claim 3, wherein the inner ring comprises a flow guiding surface on the exterior surface.

5. The spindle assembly of claim 1, wherein the inner member is a cutting tool.

6. The spindle assembly of any one of the preceding claims, wherein at least one of the plurality of flow passages has a cylindrical shape or a conical shape that terminates at a partially closed end.

7. The spindle assembly of any one of the preceding claims, wherein at least one of the plurality of flow passages is tilted relative to a longitudinal axis of the outer ring.

8. The spindle assembly of any one of the preceding claims, wherein the diffuser section is a cylindrical surface or a conical surface that radially converges towards the inner member.

9. The spindle assembly of any one of the preceding claims, further comprising a spindle-nut body having an interior area with a limit stop, wherein the inner member and the outer ring are disposed in the interior area of the spindle-nut body with the outer ring abutting the limit stop.

10. The spindle assembly of claim 9, wherein the spindle-nut body has a radially inward opening circumferential groove formed in the interior area, a seal being disposed in the circumferential groove urging the outer ring into the limit stop.

11. The spindle assembly of claim 9, wherein the outer ring has an outer-ring exterior surface having a sealing surface tapered radially outward from the axial inlet and terminating at an apex located between the axial inlet and an outlet end of the outer ring, the sealing surface being configured to engage a seal and axially retain the outer ring in the spindle-nut body.

12. The spindle assembly of claim 11, wherein the outer-ring exterior surface comprises a glide surface tapered radially inward from the apex, the glide surface being configured to facilitate inserting the outer ring into the interior area of the spindle-nut body.

13. The spindle assembly of claim 11, wherein the outer-ring exterior surface comprises a shoulder extending radially inward from the glide surface, the shoulder being configured to abut the limit stop to axially retain the outer ring in the spindle-nut body.

14. The spindle assembly of any one of the preceding claims, wherein the tubular fluid stream is selected from a group consisting of cylindrical, conical, and directed in a direction opposite a direction of rotation of the inner member.

15. The spindle assembly of any one of the preceding claims, wherein the inner member is a cutting tool and the tubular fluid stream is focused on and converges at a cutting edge of the cutting tool.
